# EUROPEAN PATENT APPLICATION

(11) **EP 4 707 972 A1**
(43) Date of publication of application: **11.03.2026**
(21) Application number: 25196337.7
(22) Date of filing: 18.08.2025
(51) Int. Cl.: G05B 19/416, B30B 15/16

(54) **METHODS AND APPARATUS TO MANAGE HYDRAULIC SYSTEMS**

(30) Priority: 19.08.2024 US 202463684723 P; 14.08.2025 US 202519299726
(71) Applicant: The Bradbury Company, Inc., Moundridge, Kansas 67107 (US)
(72) Inventor: Wollenberg, Jamie, Hesston, 67062 (US); Smith, Gregory S., Moundridge, 67107 (US)
(74) Representative: DTS Patent- und Rechtsanwälte PartmbB

(57) **Abstract**

Methods and apparatus to manage hydraulic systems are disclosed. A disclosed example apparatus for controlling a hydraulic system to process a workpiece includes interface circuitry, machine readable instructions, and programmable circuitry to be programmed by the machine readable instructions to determine pressure requirements and flow requirements for a plurality of hydraulic devices of the hydraulic system based on a sequence of operations to be performed by the hydraulic devices, predict flow of hydraulic fluid based on the pressure requirements and the flow requirements, and generate a motion profile plan for a motor powering the hydraulic system based on the predicted flow.

## Description

### FIELD OF THE DISCLOSURE

This disclosure relates generally to hydraulic systems and, more particularly, to methods and apparatus to manage hydraulic systems.

### BACKGROUND

Hydraulic systems are employed across a vast set of applications. These systems employ pressurized fluid to drive machinery and/or move mechanical components. Particularly, hydraulic systems have been used in many industrial applications, such as manufacturing, assembly, etc.

### BRIEF DESCRIPTION OF THE DRAWINGS

FIG. 1 is an example processing system in accordance with teachings of this disclosure.
FIG. 2 is an example process flow in accordance with teachings of this disclosure.
FIGS. 3A-3C depict portions of an example hydraulic system.
FIG. 4 depicts a hydraulic diagram of an example motor arrangement that can be implemented in examples disclosed herein.
FIG. 5 depicts a hydraulic diagram of an example hydraulic processing system in accordance with teachings of this disclosure.
FIG. 6 is an example graph depicting hydraulic fluid management that can be implemented in examples disclosed herein.
FIG. 7 is a block diagram of an example hydraulic management control system in accordance with teachings of this disclosure.
FIG. 8 is a flowchart representative of example machine readable instructions and/or example operations that may be executed, instantiated, and/or performed by example programmable circuitry to implement the hydraulic management control system of FIG. 7.
FIG. 9 is a block diagram of an example processing platform including programmable circuitry structured to execute, instantiate, and/or perform the example machine readable instructions and/or perform the example operations of FIG. 8 to implement the hydraulic management control system 700 of FIG. 7.

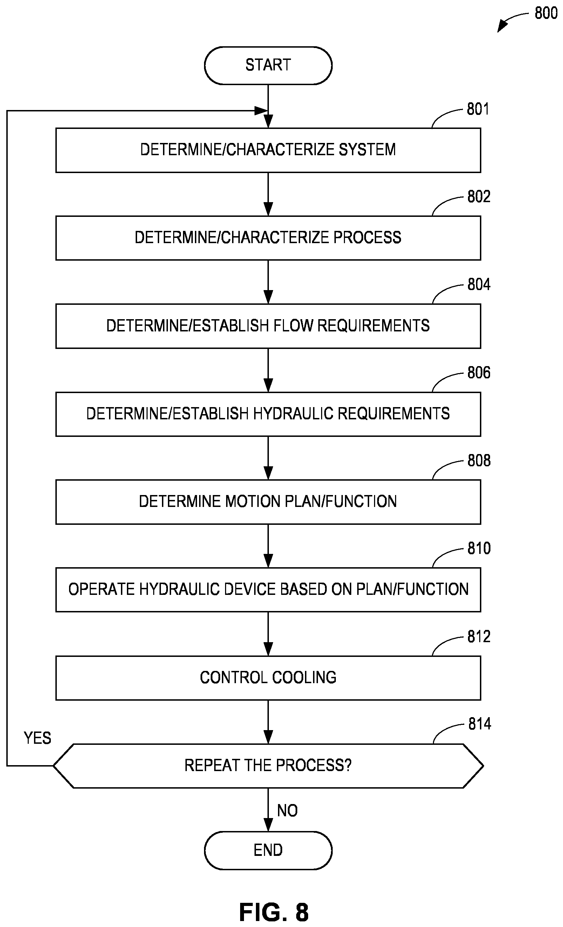

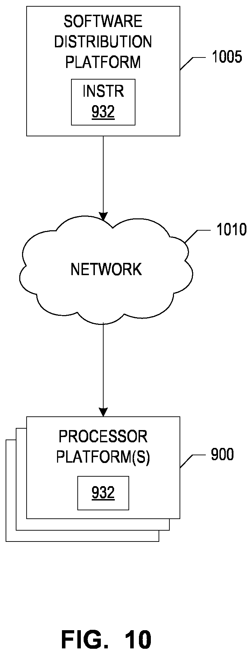

FIG. 10 is a block diagram of an example software/firmware/instructions distribution platform (e.g., one or more servers) to distribute software, instructions, and/or firmware (e.g., corresponding to the example machine readable instructions of FIG. 8) to client devices associated with end users and/or consumers (e.g., for license, sale, and/or use), retailers (e.g., for sale, re-sale, license, and/or sub-license), and/or original equipment manufacturers (OEMs) (e.g., for inclusion in products to be distributed to, for example, retailers and/or to other end users such as direct buy customers).

In general, the same reference numbers will be used throughout the drawing(s) and accompanying written description to refer to the same or like parts. The figures are not necessarily to scale.

### DETAILED DESCRIPTION

Methods and apparatus to manage hydraulic systems are disclosed. Hydraulic systems are widely used in industrial/manufacturing sites. These systems utilize pressurized fluid to move devices and/or objects in a controlled manner. In particular, the fluid is pressurized to a target degree and/or range to operate the devices and/or objects. Typically, based on changes during usage of the hydraulic fluid, the pressurized fluid can be operated at sub-optimal or less than desirable pressure ranges, thereby expending unnecessary energy and, thus, cost. Further, these sub-optimal pressure ranges can result in decreased accuracy for processing a workpiece.

Examples disclosed herein enable highly energy efficient management of such hydraulic systems by managing hydraulic pressure operation. This can be accomplished with a hydraulic power unit (HPU) or any other appropriate control device/system in accordance with teachings of this disclosure. Examples disclosed herein predict and/or anticipate hydraulic usage of a hydraulic device in a manufacturing process, such as purlin production (e.g., in a purlin press system) or roll-forming and/or other metal forming processes, for example. To that end, examples disclosed herein can accurately tailor hydraulic fluid usage (e.g., pressurization, flow, etc.) to specific processes (e.g., a sequence of notching processes, a sequence of pressing processes, a sequence of bending/forming steps, etc.). As a result, energy efficient usage of hydraulic systems and more accurate part production, amongst other advantages, is enabled. In other words, examples disclosed herein can enable hydraulic fluid delivery that control characteristics/parameters thereof at levels that improve overall efficiency and performance of a hydraulic system. Examples disclosed herein can also increase longevity of systems by accurately controlling pressure. For example, excess pressure scenarios can be reduced and/or minimized based on hydraulic fluid control in accordance with teachings of this disclosure.

Some known HPUs utilize motor soft start power sources with constant speed motors. For cooling, some known HPUs utilize cooling that is powered by an HPU motor. Further, for pressure control, known implementations utilize relief valves with a single manual set point to provide and/or dump fluid to a tank.

Examples disclosed herein utilize a variable frequency drive as opposed to a motor soft start for a power source. Further, examples disclosed herein can utilize an inverter duty motor as an HPU motor. Examples disclosed herein also can implement a separate motor (in addition to the aforementioned HPU motor) that is dedicated to providing cooling/circulation per system requirements. Some examples disclosed herein utilize a pressure transducer that measures system pressure as a pressure control mechanism. Additionally or alternatively, a flow rate sensor is utilized for regulation and/or control of the flow rate.

Examples disclosed herein can enable variable flow and pressure in hydraulic systems. In contrast, known systems utilize binary control (e.g., on/off control) of such systems. In contrast to known systems, examples disclosed herein can utilize reactive flow such that a pressure transducer provides a programmable logic controller (PLC) with live system pressure data so the PLC can determine when to ramp up/down the HPU. Examples disclosed herein can also utilize predictive flow such that a press optimization routine (e.g., logic that converts part definitions and schedules into a sequence of steps for a machine) will look toward an upcoming/future period of time and/or sequence of moves and predict flow requirements over time to allow the pump to preemptively start ramp up/down and minimize the peak flow variances. Further, examples disclosed herein can utilize variable pressure setpoints depending on what gauge/gage, yield, features, etc. are being punched in the press system. The overall fluid power system can have variable pressure targets for the pump to maintain. To that end, in accordance with teachings of this disclosure, the fluid power system and/or the pump can be coupled to a controller accumulation zone to manage peak flows across a relatively large working pressure range. Examples disclosed herein can also account for a drift in hydraulic process performance (e.g., due to tool/machine wear, process drift, etc.).

Examples disclosed herein characterize a process (e.g., a sequence of hydraulic machine operations) and determine pressure and flow requirements for a plurality of hydraulic devices of a system. In turn, hydraulic fluid flow is predicted based on the pressure and flow requirements. In turn, a motion profile plan is generated for a motor. The motion profile plan can be a time-based function to control a pressure set point of hydraulic fluid. The motion profile plan can be performed based on sensor readings, such as those from a pressure transducer. In some examples, the motion profile plan is adapted and/or adjusted based on sensor measurements.

In some examples, cooling of hydraulic fluid is performed for additional control. In some such examples, a bypass loop to a cooling device, such as a heat exchanger or other cooler, is utilized. In some examples, the motion profile plan is generated based on hydraulic characteristics of operations performed by the aforementioned hydraulic devices, of which at least two can be different types of hydraulic devices. Additionally or alternatively, the motion profile plan is generated based on timings of the operations utilizing the hydraulic fluid. In other words, examples disclosed herein can generate predictive logic based on scheduling. The scheduling can correspond to a sequence (e.g., a time-based sequence) of operations.

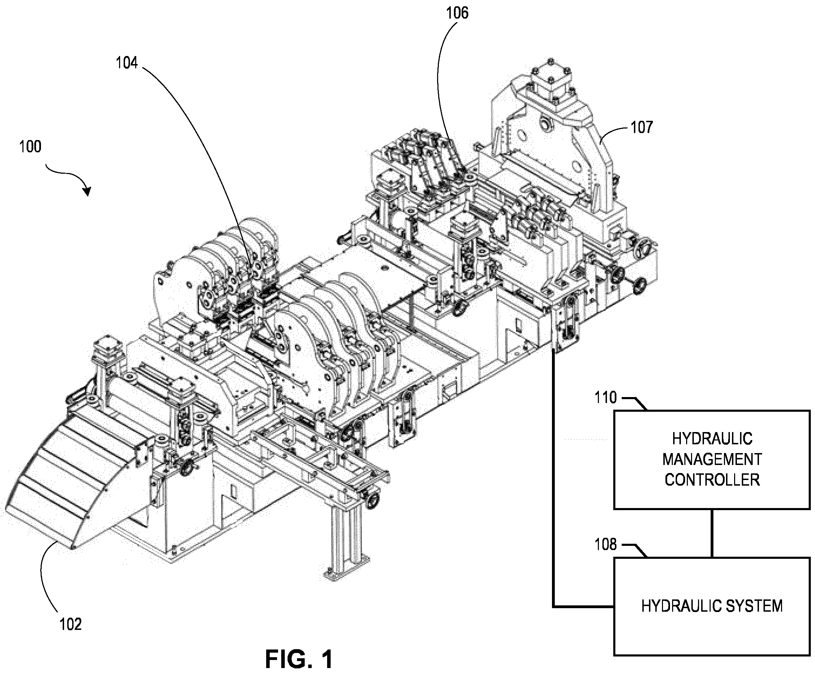

FIG. 1 is an example processing system 100 in accordance with teachings of this disclosure. The example processing system 100 is directed to metal processing, particularly purlin pressing operations and includes bending as well as notching operations for a workpiece, which is sheet metal in this example. In particular, the processing system 100 encompasses numerous different metal processing steps as the workpiece moves therethrough. The processing system 100 of the illustrated example includes a material inlet (e.g., a sheet metal inlet) 102, forming tools 104, presses or punching tools 106 that are utilized to punch holes in or otherwise remove a fixed amount of material from the aforementioned sheet metal after bending/forming operations, as well as a shear 107. Further, the processing system 100 includes a hydraulic system 108 and a hydraulic management controller 110.

To control an effect of the performance of individual notches/presses (e.g., notching tools, notching elements, notch units, pressing elements, cutting elements, sheering elements, etc.) onto the workpiece, the hydraulic system 108 provides and manages fluid to move and control aspects of the notches/presses. According to examples disclosed herein, parameters of ones of the notches/presses, such as force, notch timing, force with respect to time, etc. are controlled by the hydraulic system 108. To that end, the example hydraulic management controller 110 controls and/or directs the hydraulic system with respect to utilizing the notches/presses. The processing of the material of the forming tools 104 has an associated profile that relates hydraulic requirements that vary over time. In an overall sense, numerous hydraulic devices of a system can have different hydraulic requirements and/or usage at different times, process timings and/or time steps. Accordingly, the system can have different hydraulic requirements and/or usage over time based on operational and/or manufacturing needs. In other words, hydraulic components and systems can have a time history of hydraulic usage and/or requirements.

In accordance with teachings of this disclosure, examples disclosed herein can effectively manage hydraulic operation and/or control based on the hydraulic requirements that can vary over time with respect to multiple hydraulic devices. As a result, examples disclosed herein can manage hydraulic operation of an entire system to smooth out or regulate forecasted pressure demands for greater energy efficiency and improved operational control of individual hydraulic devices. With improved operational control, examples disclosed herein enable greater process accuracy and, thus, greater accuracy with respect to parts produced therefrom.

While the example of FIG. 1 is shown in the context of a metal processing purlin manufacturing system, examples disclosed herein can be implemented in any appropriate hydraulic devices and/or systems. Examples disclosed herein can be implemented in any of, but not limited to, metal working, roll forming, bending, stamping, embossing, shearing, assembly, metal processing, metal fabricating, robotics, or any other appropriate application. Further, examples disclosed herein can be applied to any appropriate hydraulic system including systems related to wood/fiber processing, composite processing, plastic processing, polymer processing, etc.

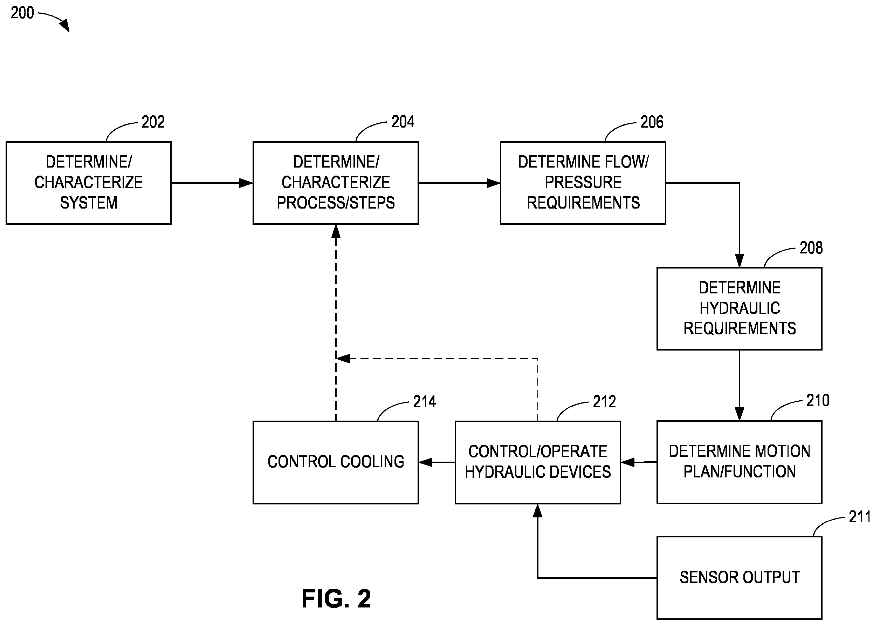

FIG. 2 depicts an example process flow 200 in accordance with teachings of this disclosure. In the illustrated example of FIG. 2, the process flow 200 is implemented to manage hydraulic control of a hydraulic system, such as the processing system 100 shown in FIG. 1. In particular, the process flow 200 is utilized in a metal working operation and can manage hydraulic operation of multiple hydraulic devices and reduce sudden shifts in pressure output of the hydraulic system by characterizing steps, such as notching, cutting, forming, stamping, embossing, or any combination thereof, along with timing of the steps along with pressure/flow requirements to generate predicted hydraulic utilization (e.g., a hydraulic forecast), as well as hydraulic control set points (e.g., hydraulic control setpoints as a function of time, pressure set points as a function of time, a hydraulic function, a time-based hydraulic instruction set, a time-based function that is based on sensor data, etc.).

At block 202, according to examples disclosed herein, the hydraulic system is determined and/or characterized. For example, a first number of forming operations are subsequently followed by a second number of cutting and/or notching operations. In this example, a configuration, an arrangement and/or sequence of hydraulic devices arranged on a processing line is/are taken into account with respect to characterizing the hydraulic system. In other words, an arrangement, sequence and/or order of the hydraulic devices can be mapped. For example, the hydraulic devices may be arranged in sequential order (e.g., in series) with respect to one another or arranged in parallel with respect to one another when viewing the hydraulic system as a circuit (e.g., a fluidic circuit). In some examples, a combination of parallel and sequential arrangement of the hydraulic devices can be utilized.

At block 204, steps/operations (e.g., operations related to metalworking, fabrication, sheet metal processing, polymer processing, fiber/wood processing, polymer processing, composite processing, etc.) of the hydraulic system with respect to a workpiece (e.g., sheet metal, fabricated metal, etc.) are identified/determined. For example, an order of operations (and associated timings) of the operations, is determined and/or characterized. The steps/operation can correspond to multiple different operations performed on the workpiece (e.g., notching, pressing, shearing, embossing, stamping forming, etc.).

At block 206, the flow/pressure requirements associated with the steps/operations are determined. According to examples disclosed herein, the flow/pressure requirements are determined based on a sequence and timing of the operations. In some examples, steps/operations performed in a relatively simultaneous manner are accounted for in determining the flow/pressure requirements. In other words, simultaneous or near simultaneous operations occurring in the same hydraulic system can be accounted for. Additionally or alternatively, the flow/pressure requirements can be determined based on material thickness, yield strength, force requirements, and a selection/identification of hydraulic devices being operated at certain times/time intervals, etc. Accordingly, examples disclosed herein can tailor hydraulic operations to meet defined workpiece output parameters.

At block 208, according to some examples disclosed herein, the hydraulic requirements associated with the flow/pressure requirements are determined. The hydraulic requirements can be parameters, settings and/or instructions associated with the steps/operations mentioned above with respect to block 206. For example, the hydraulic requirements may be generally associated with an overall pressure provided via an HPU such that the hydraulic requirements are utilized to cause a hydraulic pump and/or a motor to provide pressurized fluid to multiple devices of a system, a subsection of the system, etc. The hydraulic requirements may be expressed as a forecast of pressure demand and/or pressure requirements. The forecast can be based on a relative time of the operations/steps during a production cycle.

At block 210, in this example, a motion/plan function of the hydraulic system is determined and/or calculated. For example, a time-based function of a motor for providing hydraulic energy (e.g., an electric motor for powering a hydraulic system, a pump for hydraulic power, etc.) is determined based on the flow/pressure requirements of the steps/operations. The time-based function can include a series of setpoints (e.g., sequential setpoints) of the motor that meet pressure forecasts while reducing and/or minimizing sudden changes in pressure. Particularly, the setpoints can be expressed as a time-based function (e.g., a series of setpoints corresponding to pressure setpoints and/or flow requirement setpoints, a flow and/or pressure measurement-based function that varies with time, etc.). In some examples, the motion/plan function is adapted and/or revised based on measurements during the process (e.g., adapted or revised based on pressure measurements during different operations).

At block 211, sensor output is measured and is utilized for system control. The sensor input is to be utilized to determine a system state for operation with respect to the motion/plan function. The sensor output can include, but is not limited to, a flow meter, a pressure transducer, etc.

At block 212, the hydraulic devices and/or the hydraulic system are controlled based on the motion/plan function utilizing the aforementioned sensor output.

In some examples, the motion/plan function is controlled and/or adjusted based on sensor measurements. In particular, the motion/plan function can be adjusted (e.g., adjusted mid-process) based on pressure measurements, for example. Additionally or alternatively, the motion/plan function is adjusted based on flow rate measurements of the hydraulic fluid. However, any other appropriate parameter or reading type associated with the hydraulic fluid and/or delivery thereof can be measured instead.

At block 214, in some examples, cooling of the hydraulic fluid is controlled. For example, the hydraulic fluid controlled by the HPU can be regulated to a set temperature for increased accuracy of control of hydraulic operations (e.g., more precise control of hydraulic operations). In some examples, the cooling is varied based on time (e.g., via a time-based cooling function). According to some examples disclosed herein, a cooling motor is implemented to control a degree to which the hydraulic fluid is cooled. The cooling motor can be operated independently of the HPU and/or the aforementioned motor for providing hydraulic power/energy. As a result, by controlling fluid temperatures, examples disclosed herein can enable a greater degree of control of the overall hydraulic processes.

In some examples, a relief valve or other appropriate pressure control device is utilized for control of pressure of the hydraulic fluid. Additionally or alternatively, a cooling loop with a bypass valve is utilized to control cooling and/or a temperature level of the hydraulic fluid. According to examples disclosed herein, the aforementioned hydraulic devices can be arranged sequentially with respect to workpiece movement, but can be arranged in parallel with respect to being fluidly coupled to the pressurized hydraulic fluid. In some such examples, at least some of the hydraulic devices have a corresponding valve that is operated to vary a flow rate of the hydraulic fluid provided thereto.

According to examples disclosed herein, different tools can be accommodated for (e.g., optimized) with variable pressure/flow control present in tools of a machine, such as a press. Accordingly, the tools can be in the machine simultaneously placed, or could be used at different times (e.g., a changeout between operational modes and/or steps) such that the different parameters and/or characteristics of the individual tools and/or tool sets can be accounted for. According to some examples disclosed herein, in a changeout scenario, an HPU can be set for different setpoints based on the particular tool. In other words, target fluid settings can be parametrically set based on what tool sets are utilized and/or physically present in the machine when a specific tool is called for by the program. Such a utilization of a tool-level adjustment can be particularly advantageous in applications such as garage door raised panel embossments, amongst other applications. In some such examples, the individual tools can utilize identifiers such as, but not limited to, a series of proxies, a barcode scanner, RFID tag, etc. to identify what tools are being presented by an auxiliary changeout system (or operator) to the press and these identifiers can be automatically loaded in from settings.

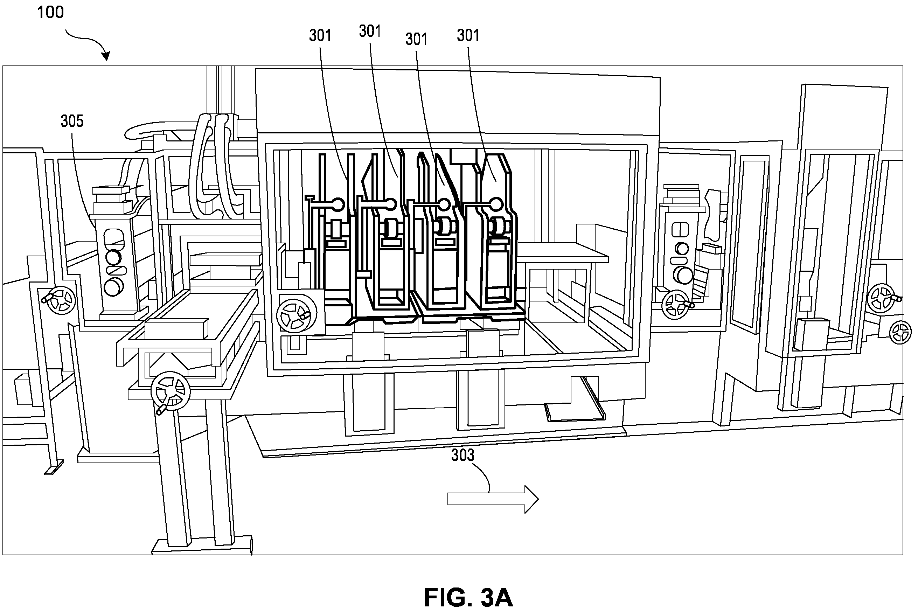

FIG. 3A depicts a portion of the example processing system 100 of FIG. 1. In the illustrated view of FIG. 3A, individual notches (e.g., notching devices, notch elements, etc.) 301 are shown and arranged along a direction of travel of a workpiece, which is generally indicated by an arrow 303. Further, a feed (e.g., a roll feed, a servo-controlled feeder, etc.) 305 is shown. In other words, the notching operations can be sequential as the workpiece moves along the direction of travel. Accordingly, the notching operations have hydraulic usage characteristics that can be expressed as a hydraulic pressure usage time history corresponding to different notches 301 being operated at different times as the workpiece travels, for example. The hydraulic pressure usage time history can vary based on amount or degree of energy/force utilized in notching operations in combination with a frequency thereof. Thus, the hydraulic usage characteristics can vary greatly with variables associated with production of the workpiece and/or production requirements/parameters.

According to examples disclosed herein, key system pressure requirements can be characterized. In particular, key parameters and/or variables that include material thickness, yield strength, and which punching tools are characterized for that part definition/pattern. Further, examples disclosed herein can utilize multiple set points such that low tonnage can correspond to 800 psi (pounds per square inch), while medium tonnage corresponds to 1400 psi and high tonnage corresponds to 2000 psi. However, any other appropriate tonnage and/or pressure ranges can be implemented instead. In other words, set point values can vary greatly based on application, operations, material, etc.

According to examples disclosed herein, flow and/or pressure requirements of hydraulic usage can be characterized. For example, part definition and production schedule information corresponding to one or more hydraulic devices can be provided to a manufacturing line and/or a controller (e.g., an HPU controller). Further, press optimization logic in the line can convert that information into a series of movements of the servo and lists of which tools need cycled during each servo stop. Accordingly, production speed can be estimated (e.g., in feet per minute (FPM)). In turn, the production speed can be combined with servo motion and press cycle times to establish an x-axis of time of expected motions. Further, combining a list of which press tools are utilized during each cycle along with displacements (e.g., volume of fluid required per cycle) each tool uses, can be utilized for determining volumetric fluid usage. Accordingly, time and volume information can be combined to create a predicted flow diagram with peak and average (e.g., a root mean square (RMS) average) flows utilized. As a result, flow predictions can be converted into HPU motor motion equivalents for a variable frequency drive (VFD) to create motion profile plans and/or sequences for an HPU motor. As a result, examples disclosed herein can utilize the motion profile plans and/or sequences to reduce sudden changes in pressure and/or flow rate, thereby enabling smoother transition of hydraulic properties, which can be advantageous from a process control perspective while increasing a life span of hydraulic equipment.

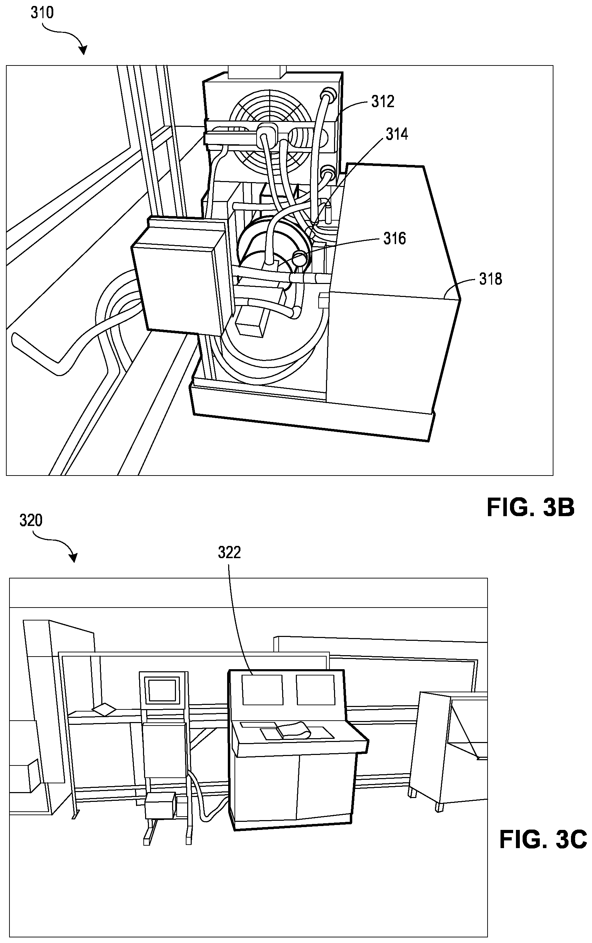

FIGS. 3B and 3C depict portions of a hydraulic system. Turning to FIG. 3B, an example HPU 310 is shown. The HPU 310 of the illustrated example includes a cooling fan 312, a pump 314, a motor 316 and a reservoir (e.g., a hydraulic fluid reservoir, a hydraulic fluid tank, etc.) 318. In some examples, the motor 316 and the pump 314 are integral and/or coupled together as an assembly. Examples disclosed herein can be implemented in an HPU, such as the example HPU 310, or any other appropriate controller/computing device and/or control system.

In operation, the HPU 310 delivers energy to hydraulic fluid of the hydraulic system via the pump 314. Particularly, the pump 314 is controlled to pressurize the fluid for hydraulic device utilization while the fan 312 is utilized to reduce heat generated by pressurizing the hydraulic fluid. In turn, the pressurize fluid is utilized for hydraulic devices, such as those of the press system shown in FIG. 1. In this example, the pump 314 is implemented to pressurize the fluid and, to that end, a degree of pressurization of the fluid can be controlled by the pump 314 in accordance with teachings of this disclosure. As a result, the HPU 310 can be controlled to deliver the hydraulic fluid in an energy efficient, stable and controlled manner that enables improved quality of parts (e.g., improved tolerance control, improved control over processing parameters, etc.).

FIG. 3C depicts an example press controller 320, which includes an operator station 322 that acts as a user interface (e.g., for a VFD). According to examples disclosed herein, the press controller 320 can be programmed with a sequence to control a pump associated with at least one hydraulic device to enable controlled utilization of hydraulic fluid, which can be energy efficient as well as enable greater control of part conformance to tolerances for processes such as, but not limited to, roll forming, bending, purlin manufacturing, notching, etc. Examples disclosed herein can program, adjust and/or control utilization of the pump and/or an HPU to account for different manufacturing parameters including, but not limited to, hydraulic pressure usage, hydraulic flow requirements, operation timings, operation order, system pressure/flow requirements, characteristics of an overall process, material characteristics, desired workpiece/material output, etc. Examples disclosed herein can incorporate and/or be communicatively coupled to the press controller 320 and/or the HPU 310 of FIG. 3B.

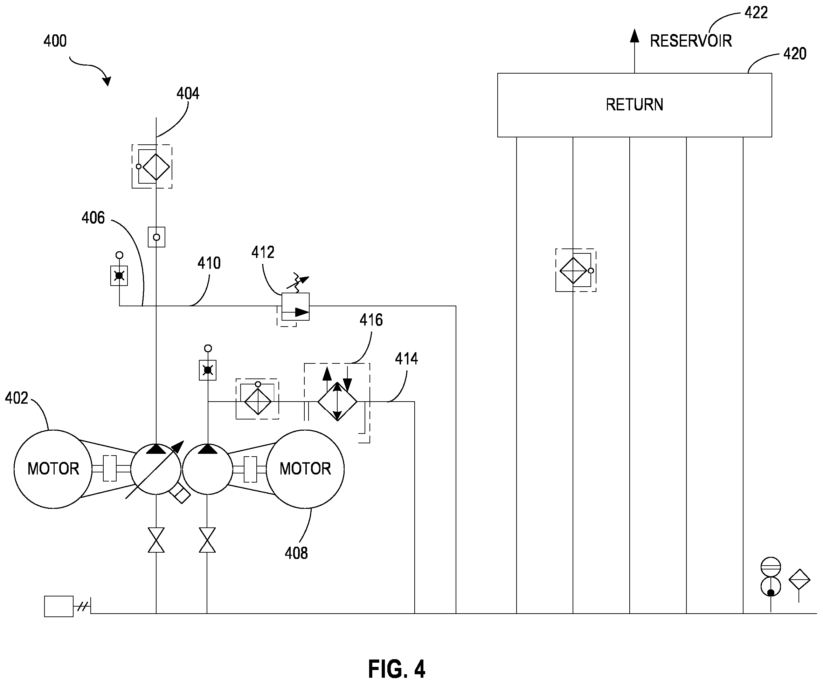

FIG. 4 depicts a hydraulic diagram 400 of an example hydraulic arrangement that can be implemented in examples disclosed herein. In the illustrated example of FIG. 4, a hydraulic schematic is shown depicting control of a motor (an electric motor for hydraulic systems) 402 for controlled pressurization of a hydraulic system in accordance with teachings of this disclosure. In this example, a supply line (e.g., a trunk line, a main hydraulic supply, etc.) 404 is shown. Further, a position 406 indicates an example placement of a pressure transducer that can be used in conjunction with a manual gauge. Further, the example electric motor 402 can rotate in a range between 300-1500 rotations per minute (rpm). According to some examples disclosed herein, a cooling motor 408 is also implemented. Further, a bypass 410 having a relief valve 412, a cooling line 414 having a heat exchanger 416, and a return 420 are shown in the illustrated example of FIG. 4. In this example, the return 420 corresponds to a fluid reservoir (e.g., an HPU reservoir, a fluid reservoir, a fluid tank, etc.) 422.

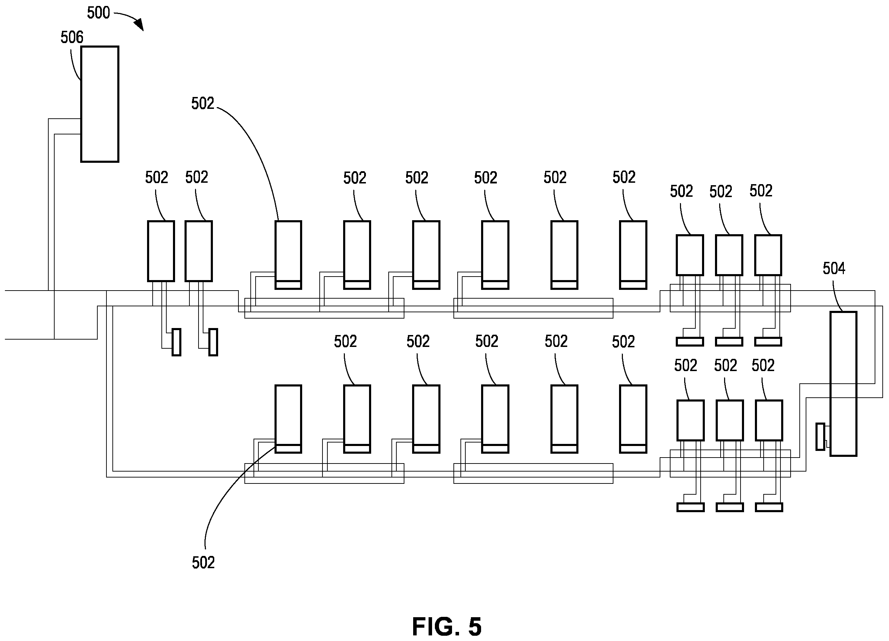

In operation, the motor 402 provides pressurized fluid to a hydraulic system such as that shown and described in connection with FIG. 5 below, via the supply line 404. In particular, the motor 402 is controlled to vary a degree of pressure and/or flow rate of the hydraulic fluid provided to the hydraulic system. In the illustrated example of FIG. 4, the relief valve 412 of the bypass 410 is utilized to provide at least a portion or some of the hydraulic fluid to the return 420. According to some examples disclosed herein, the cooling motor 408 can be utilized to cool at least a portion of the fluid by providing the fluid to the cooling line 114 and, thus, the heat exchanger 416 before providing the fluid back to the return 420 and, subsequently, the aforementioned reservoir 422.

FIG. 5 depicts a hydraulic diagram 500 of an example hydraulic processing system and/or device in accordance with teachings of this disclosure. In the illustrated example of FIG. 5, individual presses/notching elements 502 are shown as part of the hydraulic diagram 500. The example presses/notching elements 502 are arranged along a direction of travel of a workpiece and laterally across the direction of travel. Further, in this example, a shear 504 is placed/arranged onto the line. In this example, each of the presses/notching elements 502 and the shear 504 are controlled with hydraulic fluid provided thereto. Accordingly, pressure, and fluid flow (e.g., fluid flow profile) to the presses/notching elements 502 can be controlled in a sequence and/or function that reduces energy usage (e.g., by reducing excess pressure) and enables more precise control of forces applied to the workpiece, which can be particularly advantageous in industrial production applications and, in particular, metal working. According to some examples disclosed herein, at least one accumulator (e.g., an accumulator tank) is implemented for pressure and/or fluid control.

As can be seen in the illustrated example of FIG. 5, the presses/notching elements 502 and the shear 504 are arranged sequentially with respect to movement of a workpiece therethrough. However, with respect to hydraulic operations, the presses/notching elements 502 and the shear 504 can be arranged in parallel. Particularly, each of the presses/notching elements 502 and the shear 504 can be supplied with hydraulic fluid from a main valve 506. To that end, the presses/notching elements 502 and the shear 504 have a respective valve fluidly coupled thereto for receiving the hydraulic fluid from the main valve 506. Accordingly, the respective valves can be operated and/or controlled (e.g., controlled by varying a degree to which they are open/closed to enable flow therethrough) for supplying the hydraulic fluid. In accordance with teachings of this disclosure, a pressure and/or a flow rate of the hydraulic fluid provided to the main valve 506 for distribution to different hydraulic devices can be controlled for improved energy efficiency and increased pressure stability as well as more accurate pressure control. As a result of the improved controlled accuracy, workpieces produced by the example implementation of FIG. 5 can be produced with greater accuracy.

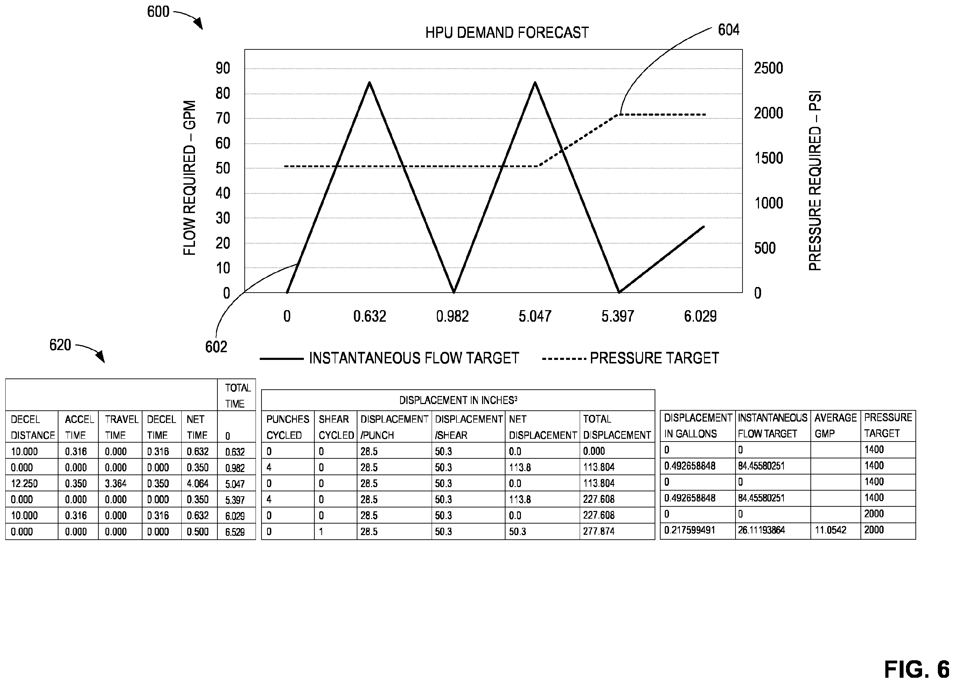

FIG. 6 is an example graph 600 depicting hydraulic fluid management that can be implemented in examples disclosed herein. The graph 600 depicted in FIG. 6 relates flow required and/or forecasted in gallons per minute (GPM) with pressure in pounds per square in (PSI) with respect to time. In the illustrated example of FIG. 6, the graph 600 represents an instantaneous flow target 602 in conjunction with a pressure target 604. According to examples disclosed herein, the instantaneous flow target 602 can be utilized to predict a hydraulic flow requirement usage that is appropriate to a production sequence (e.g., a sequence of press/notch operations) while the pressure target 604 corresponds to a controlled pressure of a hydraulic system to meet requirements of the instantaneous flow target 602, for example. FIG. 6 also depicts a table of example calculations and/or values that can be used to generate a graph similar or identical to the graph 600 or at least one array of values.

According to examples disclosed herein, the flow target 602 and/or the pressure target 604 are based on hydraulic system requirements for a series of processing steps of multiple hydraulic devices of the aforementioned hydraulic system. In particular, the flow target 602 and/or the pressure target 604 can be based on desired material processing output, hydraulic devices/operations selected for utilization, timing and sequence of the operations, characteristics and/or calibration of the hydraulic devices, energy usage considerations, limitations of the hydraulic system, etc. Accordingly, a demand forecast of hydraulic requirements is predicted and/or determined.

As can be seen in FIG. 6, an example table 620 depicts example parameter values related to processing of a workpiece, which is sheet metal in this example. In the illustrated view of FIG. 6, the table 620 illustrates a time-based history of different processing steps, which includes pressing, punching and shearing process steps. Particularly, the far left portion of the table 620 corresponds to a servo system (e.g., for controlling a feed roll) providing and/or material to presses, whereby the distances and correspond to a feed movement of the material via the aforementioned servo system. In the illustrated view of FIG. 6, time-based steps are shown in conjunction with corresponding flow targets and pressure targets corresponding to the aforementioned processing steps. Further, the right portion of the table 620 corresponds to timing of hydraulic operations, including shearing and punching. As can be seen in the illustrated view of FIG. 6, when material is being moved and/or provided by the servo system, the hydraulic system and/or operations are generally idle (and vice versa). Accordingly, examples disclosed herein can account for the sequence, timing, operations, etc. of the hydraulic operations in conjunction with material being provided.

In accordance with teachings of this disclosure, based on accounting for different specific parameters and timing of the processing steps, examples disclosed herein can be highly customizable to specific processing operations in manufacturing processes. As a result, examples disclosed herein enable more energy efficient usage of hydraulic energy. In particular, examples disclosed herein can limit over-pressurization of hydraulic energy, thereby enabling a reduction in energy/power usage and, thus, costs associated therewith. While the example of FIG. 6 is shown in the context of shearing and punching operations with respect to a metal working process, examples disclosed herein can be applied to any metal working process or any other hydraulic system type beyond that utilized for metal working.

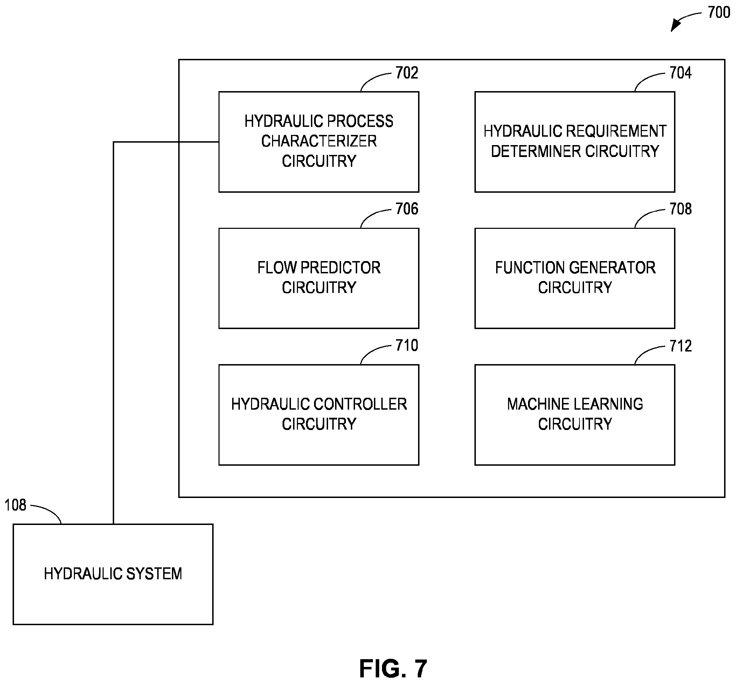

FIG. 7 is a block diagram of an example implementation of an example hydraulic management control system 700 to control hydraulic operations of an industrial/manufacturing process. The hydraulic management control system 700 can be implemented in the example hydraulic system 108, the example hydraulic management controller 110, the example press controller 320 and/or the example operator station 322. The hydraulic management control system 700 of FIG. 7 may be instantiated (e.g., creating an instance of, bring into being for any length of time, materialize, implement, etc.) by programmable circuitry such as a Central Processor Unit (CPU) executing first instructions. Additionally or alternatively, the hydraulic management control system 700 of FIG. 7 may be instantiated (e.g., creating an instance of, bring into being for any length of time, materialize, implement, etc.) by (i) an Application Specific Integrated Circuit (ASIC) and/or (ii) a Field Programmable Gate Array (FPGA) structured and/or configured in response to execution of second instructions to perform operations corresponding to the first instructions. It should be understood that some or all of the circuitry of FIG. 7 may, thus, be instantiated at the same or different times. Some or all of the circuitry of FIG. 7 may be instantiated, for example, in one or more threads executing concurrently on hardware and/or in series on hardware. Moreover, in some examples, some or all of the circuitry of FIG. 7 may be implemented by microprocessor circuitry executing instructions and/or FPGA circuitry performing operations to implement one or more virtual machines and/or containers.

The example hydraulic management control system 700 includes example hydraulic process characterizer circuitry 702, example hydraulic requirement determiner circuitry 704, example flow predictor circuitry 706, example function generator circuitry 708, example hydraulic controller circuitry 710 and example machine learning circuitry 712. The hydraulic management control system 700 can include, be integrated with and/or be communicatively coupled to the hydraulic system 108.

The hydraulic process characterizer circuitry 702 of the illustrated example is implemented to characterize and/or determine a process that utilizes a hydraulic system having multiple hydraulic devices. The process can be a sequence of steps and/or movements (e.g., punching steps, pressing steps, notching steps, forming steps, etc.) controlled by the hydraulic system that may be performed in an asynchronous or a simultaneous manner. Further, the example process characterizer circuitry 702 can determine and/or characterize hydraulic devices and/or an arrangement (e.g., a sequential arrangement, a parallel arrangement, etc.) of the hydraulic devices for characterizing and/or determining the process. In some examples, the process characterizer circuitry 702 is instantiated by programmable circuitry executing process characterizer instructions and/or configured to perform operations such as those represented by the flowchart of FIG. 8.

The example hydraulic requirement determiner circuitry 704 determines hydraulic requirements (e.g., hydraulic pressure requirements, flow requirements, etc.) over time. According to examples disclosed herein, the hydraulic requirement determiner circuitry 704 can generate a hydraulic forecast corresponding to multiple processes being performed in a system of hydraulic devices. In some such examples, the hydraulic forecast can correspond to flow rate, desired pressure stability and/or pressure requirements of the hydraulic fluid based on an arrangement and/or order of the hydraulic devices. In some examples, the hydraulic requirement determiner circuitry 704 is instantiated by programmable circuitry executing hydraulic requirement determiner instructions and/or configured to perform operations such as those represented by the flowchart of FIG. 8.

According to examples disclosed herein, the flow predictor circuitry 706 can be implemented to predict flow properties of hydraulic fluid during the aforementioned process steps (e.g., hydraulic operation steps). According to examples disclosed herein, the flow predictor circuitry 706 utilizes predetermined and/or measured hydraulic requirements for different operations corresponding to respective workpiece parameters. In a particular example, hydraulic operation requirements in conjunction with desired workpiece parameters are taken into account for predicting flow properties. In some examples, the flow predictor circuitry 706 is instantiated by programmable circuitry executing flow predictor instructions and/or configured to perform operations such as those represented by the flowchart of FIG. 8.

The example function generator circuitry 708 is implemented to generate a function and/or a set of instructions based on the hydraulic requirements and/or the predicted flow properties of the hydraulic fluid. According to some examples disclosed herein, the function generator circuitry 708 generates the function to control a pump and/or a motor of the pump with respect to time (e.g., hydraulic operation timings). The generated function can be a time-based function. Additionally or alternatively, the generated function can operate and/or can be adapted based on signals related to when operations have been performed (e.g., signals indicating a notching or shearing operation has been performed/completed, etc.). In some examples, the function generator circuitry 708 is instantiated by programmable circuitry executing function generator instructions and/or configured to perform operations such as those represented by the flowchart of FIG. 8.

In this example, the hydraulic controller circuitry 710 controls the hydraulic system to perform the aforementioned process. In particular, the hydraulic controller circuitry 710 controls the hydraulic system with a sequence of commands/instructions that varies parameters such as hydraulic fluid flow and/or pressure, etc., over the course of the process. In this example, the hydraulic controller circuitry 710 controls the parameters with respect to time and/or progress in the sequence. In some examples, the hydraulic controller circuitry 710 utilizes sensor data from a sensor, such as a pressure transducer, for example, to control a degree to which the hydraulic process is adjusted. In some examples, the hydraulic controller circuitry 710 is instantiated by programmable circuitry executing hydraulic controller instructions and/or configured to perform operations such as those represented by the flowchart of FIG. 8.

In some examples, the machine learning circuitry 712 is implemented to determine and/or hydraulic properties and/or usage of a hydraulic process and/or sequence of hydraulic operations. For example, the machine learning circuitry 712 can train a machine learning model with hydraulic operations/steps in conjunction with corresponding hydraulic usage/requirements. In turn, the machine learning model can be utilized to predict hydraulic usage/requirements for a process. In some examples, the machine learning model can take into account desired workpiece output. The process can be input and/or provided to the machine learning model as parameters thereof. In some examples, the machine learning circuitry 712 is utilized to train a machine learning model to generate motion plans/functions based on output from previous operations performed. In some examples, the machine learning circuitry 712 is instantiated by programmable circuitry executing machine learning instructions and/or configured to perform operations such as those represented by the flowchart of FIG. 8.

While an example manner of implementing the hydraulic management control system 700 of FIG. 7 is illustrated in FIG. 7, one or more of the elements, processes, and/or devices illustrated in FIG. 7 may be combined, divided, rearranged, omitted, eliminated, and/or implemented in any other way. Further, the example hydraulic process characterizer circuitry 702, the example hydraulic requirement determiner circuitry 704, the example flow predictor circuitry 706, the example function generator circuitry 708, the example hydraulic controller circuitry 710, the example machine learning circuitry 712, and/or, more generally, the example hydraulic management control system 700 of FIG. 7, may be implemented by hardware alone or by hardware in combination with software and/or firmware. Thus, for example, any of the example hydraulic process characterizer circuitry 702, the example hydraulic requirement determiner circuitry 704, the example flow predictor circuitry 706, the example function generator circuitry 708, the example hydraulic controller circuitry 710, the example machine learning circuitry 712, and/or, more generally, the example hydraulic management control system 700, could be implemented by programmable circuitry in combination with machine readable instructions (e.g., firmware or software), processor circuitry, analog circuit(s), digital circuit(s), logic circuit(s), programmable processor(s), programmable microcontroller(s), graphics processing unit(s) (GPU(s)), digital signal processor(s) (DSP(s)), ASIC(s), programmable logic device(s) (PLD(s)), and/or field programmable logic device(s) (FPLD(s)) such as FPGAs. Further still, the example hydraulic management control system 700 of FIG. 7 may include one or more elements, processes, and/or devices in addition to, or instead of, those illustrated in FIG. 7, and/or may include more than one of any or all of the illustrated elements, processes and devices.

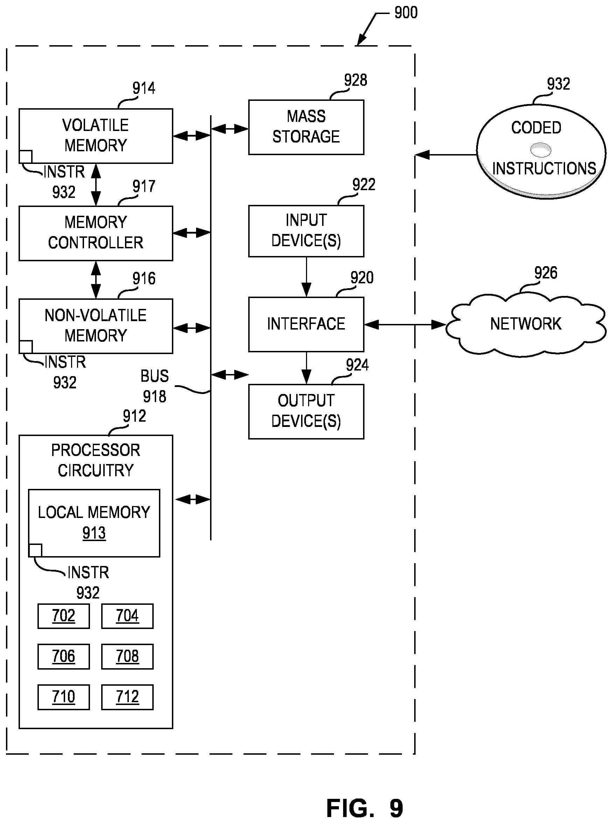

A flowchart representative of example machine readable instructions, which may be executed by programmable circuitry to implement and/or instantiate the hydraulic management control system 700 of FIG. 7 and/or representative of example operations which may be performed by programmable circuitry to implement and/or instantiate the hydraulic management control system 700 of FIG. 7, is shown in FIG. 8. The machine readable instructions may be one or more executable programs or portion(s) of one or more executable programs for execution by programmable circuitry such as the programmable circuitry 912 shown in the example processor platform 900 discussed below in connection with FIG. 9 and/or may be one or more function(s) or portion(s) of functions to be performed by the example programmable circuitry (e.g., an FPGA). In some examples, the machine readable instructions cause an operation, a task, etc., to be carried out and/or performed in an automated manner in the real world. As used herein, "automated" means without human involvement.

The program may be embodied in instructions (e.g., software and/or firmware) stored on one or more non-transitory computer readable and/or machine readable storage medium such as cache memory, a magnetic-storage device or disk (e.g., a floppy disk, a Hard Disk Drive (HDD), etc.), an optical-storage device or disk (e.g., a Blu-ray disk, a Compact Disk (CD), a Digital Versatile Disk (DVD), etc.), a Redundant Array of Independent Disks (RAID), a register, ROM, a solid-state drive (SSD), SSD memory, non-volatile memory (e.g., electrically erasable programmable read-only memory (EEPROM), flash memory, etc.), volatile memory (e.g., Random Access Memory (RAM) of any type, etc.), and/or any other storage device or storage disk. The instructions of the non-transitory computer readable and/or machine readable medium may program and/or be executed by programmable circuitry located in one or more hardware devices, but the entire program and/or parts thereof could alternatively be executed and/or instantiated by one or more hardware devices other than the programmable circuitry and/or embodied in dedicated hardware. The machine readable instructions may be distributed across multiple hardware devices and/or executed by two or more hardware devices (e.g., a server and a client hardware device). For example, the client hardware device may be implemented by an endpoint client hardware device (e.g., a hardware device associated with a human and/or machine user) or an intermediate client hardware device gateway (e.g., a radio access network (RAN)) that may facilitate communication between a server and an endpoint client hardware device. Similarly, the non-transitory computer readable storage medium may include one or more mediums. Further, although the example program is described with reference to the flowchart illustrated in FIG. 8, many other methods of implementing the example hydraulic management control system 700 may alternatively be used. For example, the order of execution of the blocks of the flowchart may be changed, and/or some of the blocks described may be changed, eliminated, or combined. Additionally or alternatively, any or all of the blocks of the flow chart may be implemented by one or more hardware circuits (e.g., processor circuitry, discrete and/or integrated analog and/or digital circuitry, an FPGA, an ASIC, a comparator, an operational-amplifier (op-amp), a logic circuit, etc.) structured to perform the corresponding operation without executing software or firmware. The programmable circuitry may be distributed in different network locations and/or local to one or more hardware devices (e.g., a single-core processor (e.g., a single core CPU), a multi-core processor (e.g., a multi-core CPU, an XPU, etc.)). For example, the programmable circuitry may be a CPU and/or an FPGA located in the same package (e.g., the same integrated circuit (IC) package or in two or more separate housings), one or more processors in a single machine, multiple processors distributed across multiple servers of a server rack, multiple processors distributed across one or more server racks, etc., and/or any combination(s) thereof.

The machine readable instructions described herein may be stored in one or more of a compressed format, an encrypted format, a fragmented format, a compiled format, an executable format, a packaged format, etc. Machine readable instructions as described herein may be stored as data (e.g., computer-readable data, machine-readable data, one or more bits (e.g., one or more computer-readable bits, one or more machine-readable bits, etc.), a bitstream (e.g., a computer-readable bitstream, a machine-readable bitstream, etc.), etc.) or a data structure (e.g., as portion(s) of instructions, code, representations of code, etc.) that may be utilized to create, manufacture, and/or produce machine executable instructions. For example, the machine readable instructions may be fragmented and stored on one or more storage devices, disks and/or computing devices (e.g., servers) located at the same or different locations of a network or collection of networks (e.g., in the cloud, in edge devices, etc.). The machine readable instructions may require one or more of installation, modification, adaptation, updating, combining, supplementing, configuring, decryption, decompression, unpacking, distribution, reassignment, compilation, etc., in order to make them directly readable, interpretable, and/or executable by a computing device and/or other machine. For example, the machine readable instructions may be stored in multiple parts, which are individually compressed, encrypted, and/or stored on separate computing devices, wherein the parts when decrypted, decompressed, and/or combined form a set of computer-executable and/or machine executable instructions that implement one or more functions and/or operations that may together form a program such as that described herein.

In another example, the machine readable instructions may be stored in a state in which they may be read by programmable circuitry, but require addition of a library (e.g., a dynamic link library (DLL)), a software development kit (SDK), an application programming interface (API), etc., in order to execute the machine-readable instructions on a particular computing device or other device. In another example, the machine readable instructions may need to be configured (e.g., settings stored, data input, network addresses recorded, etc.) before the machine readable instructions and/or the corresponding program(s) can be executed in whole or in part. Thus, machine readable, computer readable and/or machine readable media, as used herein, may include instructions and/or program(s) regardless of the particular format or state of the machine readable instructions and/or program(s).

The machine readable instructions described herein can be represented by any past, present, or future instruction language, scripting language, programming language, etc. For example, the machine readable instructions may be represented using any of the following languages: C, C++, Java, C#, Perl, Python, JavaScript, HyperText Markup Language (HTML), Structured Query Language (SQL), Swift, etc.

As mentioned above, the example operations of FIG. 8 may be implemented using executable instructions (e.g., computer readable and/or machine readable instructions) stored on one or more non-transitory computer readable and/or machine readable media. As used herein, the terms non-transitory computer readable medium, non-transitory computer readable storage medium, non-transitory machine readable medium, and/or non-transitory machine readable storage medium are expressly defined to include any type of computer readable storage device and/or storage disk and to exclude propagating signals and to exclude transmission media. Examples of such non-transitory computer readable medium, non-transitory computer readable storage medium, non-transitory machine readable medium, and/or non-transitory machine readable storage medium include optical storage devices, magnetic storage devices, an HDD, a flash memory, a read-only memory (ROM), a CD, a DVD, a cache, a RAM of any type, a register, and/or any other storage device or storage disk in which information is stored for any duration (e.g., for extended time periods, permanently, for brief instances, for temporarily buffering, and/or for caching of the information). As used herein, the terms "non-transitory computer readable storage device" and "non-transitory machine readable storage device" are defined to include any physical (mechanical, magnetic and/or electrical) hardware to retain information for a time period, but to exclude propagating signals and to exclude transmission media. Examples of non-transitory computer readable storage devices and/ or non-transitory machine readable storage devices include random access memory of any type, read only memory of any type, solid state memory, flash memory, optical discs, magnetic disks, disk drives, and/or redundant array of independent disks (RAID) systems. As used herein, the term "device" refers to physical structure such as mechanical and/or electrical equipment, hardware, and/or circuitry that may or may not be configured by computer readable instructions, machine readable instructions, etc., and/or manufactured to execute computer-readable instructions, machine-readable instructions, etc.

FIG. 8 is a flowchart representative of example machine readable instructions and/or example operations 800 that may be executed, instantiated, and/or performed by programmable circuitry to control operation of a hydraulic system for a manufacturing process. The example machine-readable instructions and/or the example operations 800 of FIG. 8 begin at block 801, at which the hydraulic process characterizer circuitry 702 determines and/or characterizes the hydraulic system. In particular, the example hydraulic process characterizer circuitry 702 can determine an arrangement, a sequence, an order and/or a setup of multiple hydraulic devices of a system (e.g., a feed roller in combination with at least one of a forming device, a press device, a notching device, a shear device, etc.).

At block 802, the hydraulic process characterizer circuitry 702 of the illustrated example determines and/or characterizes a process (e.g., a sequence of hydraulic operations). For example, the hydraulic process characterizer circuitry 702 can characterize and/or express an order of hydraulic devices and, thus, operations thereof for a manufacturing process (e.g., bending operations followed by notching operations, etc.).

At block 804, the example flow predictor circuitry 706 determines and/or establishes flow characteristics and/or pressure characteristics associated with the characterized process. In some examples, the machine learning circuitry 712 is utilized to train and implement a machine learning model corresponding to flow/pressure requirements of hydraulic operations. The machine learning model can be trained with workpiece output parameters (e.g., desired workpiece characteristics) along with corresponding hydraulic parameters and/or functions (e.g., hydraulic set points as a function of time). In an inference phase, the machine learning model can be utilized to determine and/or generate a function and/or a sequence to control operation of the hydraulic system based on desired workpiece characteristics. Additionally or alternatively, a machine learning model may be trained with hydraulic operations (e.g., pressure utilization steps) and energy usage whereby the machine learning model can be utilized to determine and/or predict energy usage of a hydraulic function, a sequence of hydraulic operation steps and/or hydraulic processing.

At block 806, the example hydraulic requirement determiner circuitry 704 determines hydraulic requirements and/or usage of the process and/or operations of the process. In this example, the example hydraulic requirement determiner circuitry 704 determines the hydraulic requirements and/or usage based on the flow and/or pressure characteristics. According to examples disclosed herein, the hydraulic requirements and/or the usage is/are based on the sequence of operations (e.g., forming operations followed by notching operations, etc.) and the general timing of the sequence of operations. To that end, hydraulic requirements (e.g., pressure requirements, flow requirements, displacement requirements, etc.) are characterized for the sequence of operations. According to examples disclosed herein, multiple processes (e.g., simultaneous processes) are accounted for in determining hydraulic requirements (e.g., a notching and forming process at similar and/or overlapping times). Particularly, a sequence and timing (e.g., a relative timing) of hydraulic operations are taken into account for determining hydraulic requirements.

At block 808, the example function generator circuitry 708 determines a function (e.g., a plan, an instruction, a sequence, a motion profile plan, a hydraulic pressure sequence, a hydraulic operation sequence, etc.) to control the hydraulic system utilized. For example, a sequence of pressure levels with respect to time (e.g., a time-based group of pressure and/or flow setpoints). According to examples disclosed herein, the example function generator circuitry 708 develops a measurement-based function that controls a hydraulic pressure and/or fluid flow with respect to time (e.g., as a function of time) for the process. Accordingly, for function generation, parameters and/or desired output of the hydraulic operations can be accounted for with respect to characterization of the hydraulic operations. In some examples, the function to control the hydraulic systems is adjusted (e.g., adjusted while performing the hydraulic operations) by the function generator circuitry 708 (e.g., during an operation, between operations, etc.). Additionally or alternatively, the example function generator circuitry 708 predicts and/or takes into account energy usage of the hydraulic system for generating the function. Accordingly, the example function generator circuitry 708 can be utilized to adjust hydraulic operations and/or parameters for energy savings/conservation.

At block 810, the example hydraulic controller circuitry 710 controls the operation of a motor with respect to time during the process. According to examples disclosed herein, the motor is controlled based on the function, sensor output, the instructions and/or the sequence generated by the aforementioned function generator circuitry 708. In some examples, flow requirements and/or a demand forecast (e.g., an HPU demand forecast) is/are taken into account with operation of the motor. In this example, operation of the motor is controlled based on the function in conjunction with sensor data from a pressure transducer, a flow rate sensor or any other appropriate type of sensor.

At block 812, in some examples, the hydraulic controller circuitry 710 controls cooling of the hydraulic fluid. For example, the hydraulic controller circuitry 710 can control a cooling motor, such as the cooling motor 408 shown in FIG. 4. For example, the cooling motor can be controlled by the aforementioned function. In other words, a temperature and/or cooling of the fluid can be controlled in tandem with controlling pressure and/or flow rates thereof.

At block 814, it is determined by the example hydraulic controller circuitry 710 whether to repeat the process. If the process is to be repeated, control of the process returns to block 801. Otherwise, the process ends. This determination may be based on whether the hydraulic processes are complete, whether the processing of the workpiece(s) is complete, whether additional hydraulic processes are to be performed, whether a change in hydraulic requirements or steps has occurred, etc.

FIG. 9 is a block diagram of an example programmable circuitry platform 900 structured to execute and/or instantiate the example machine-readable instructions and/or the example operations of FIG. 8 to implement the hydraulic management control system 700 of FIG. 7. The programmable circuitry platform 900 can be, for example, a server, a personal computer, a workstation, a self-learning machine (e.g., a neural network), a mobile device (e.g., a cell phone, a smart phone, a tablet such as an iPad^{™}), a personal digital assistant (PDA), an Internet appliance, or any other type of computing and/or electronic device.

The programmable circuitry platform 900 of the illustrated example includes programmable circuitry 912. The programmable circuitry 912 of the illustrated example is hardware. For example, the programmable circuitry 912 can be implemented by one or more integrated circuits, logic circuits, FPGAs, microprocessors, CPUs, GPUs, DSPs, and/or microcontrollers from any desired family or manufacturer. The programmable circuitry 912 may be implemented by one or more semiconductor based (e.g., silicon based) devices. In this example, the programmable circuitry 912 implements the example hydraulic process characterizer circuitry 702, the example hydraulic requirement determiner circuitry 704, the example flow predictor circuitry 706, the example function generator circuitry 708, the example hydraulic controller circuitry 710, and the example machine learning circuitry 712.

The programmable circuitry 912 of the illustrated example includes a local memory 913 (e.g., a cache, registers, etc.). The programmable circuitry 912 of the illustrated example is in communication with main memory 914, 916, which includes a volatile memory 914 and a non-volatile memory 916, by a bus 918. The volatile memory 914 may be implemented by Synchronous Dynamic Random Access Memory (SDRAM), Dynamic Random Access Memory (DRAM), RAMBUS^{®} Dynamic Random Access Memory (RDRAM^{®}), and/or any other type of RAM device. The non-volatile memory 916 may be implemented by flash memory and/or any other desired type of memory device. Access to the main memory 914, 916 of the illustrated example is controlled by a memory controller 917. In some examples, the memory controller 917 may be implemented by one or more integrated circuits, logic circuits, microcontrollers from any desired family or manufacturer, or any other type of circuitry to manage the flow of data going to and from the main memory 914, 916.

The programmable circuitry platform 900 of the illustrated example also includes interface circuitry 920. The interface circuitry 920 may be implemented by hardware in accordance with any type of interface standard, such as an Ethernet interface, a universal serial bus (USB) interface, a Bluetooth^{®} interface, a near field communication (NFC) interface, a Peripheral Component Interconnect (PCI) interface, and/or a Peripheral Component Interconnect Express (PCle) interface.

In the illustrated example, one or more input devices 922 are connected to the interface circuitry 920. The input device(s) 922 permit(s) a user (e.g., a human user, a machine user, etc.) to enter data and/or commands into the programmable circuitry 912. The input device(s) 922 can be implemented by, for example, an audio sensor, a microphone, a camera (still or video), a keyboard, a button, a mouse, a touchscreen, a trackpad, a trackball, an isopoint device, and/or a voice recognition system.

One or more output devices 924 are also connected to the interface circuitry 920 of the illustrated example. The output device(s) 924 can be implemented, for example, by display devices (e.g., a light emitting diode (LED), an organic light emitting diode (OLED), a liquid crystal display (LCD), a cathode ray tube (CRT) display, an in-place switching (IPS) display, a touchscreen, etc.), a tactile output device, a printer, and/or speaker. The interface circuitry 920 of the illustrated example, thus, typically includes a graphics driver card, a graphics driver chip, and/or graphics processor circuitry such as a GPU.

The interface circuitry 920 of the illustrated example also includes a communication device such as a transmitter, a receiver, a transceiver, a modem, a residential gateway, a wireless access point, and/or a network interface to facilitate exchange of data with external machines (e.g., computing devices of any kind) by a network 926. The communication can be by, for example, an Ethernet connection, a digital subscriber line (DSL) connection, a telephone line connection, a coaxial cable system, a satellite system, a beyond-line-of-sight wireless system, a line-of-sight wireless system, a cellular telephone system, an optical connection, etc.

The programmable circuitry platform 900 of the illustrated example also includes one or more mass storage discs or devices 928 to store firmware, software, and/or data. Examples of such mass storage discs or devices 928 include magnetic storage devices (e.g., floppy disk, drives, HDDs, etc.), optical storage devices (e.g., Blu-ray disks, CDs, DVDs, etc.), RAID systems, and/or solid-state storage discs or devices such as flash memory devices and/or SSDs.

The machine readable instructions 932, which may be implemented by the machine readable instructions of FIG. 8, may be stored in the mass storage device 928, in the volatile memory 914, in the non-volatile memory 916, and/or on at least one non-transitory computer readable storage medium such as a CD or DVD which may be removable.

A block diagram illustrating an example software distribution platform 1005 to distribute software such as the example machine readable instructions 932 of FIG. 9 to other hardware devices (e.g., hardware devices owned and/or operated by third parties from the owner and/or operator of the software distribution platform) is illustrated in FIG. 10. The example software distribution platform 1005 may be implemented by any computer server, data facility, cloud service, etc., capable of storing and transmitting software to other computing devices. The third parties may be customers of the entity owning and/or operating the software distribution platform 1005. For example, the entity that owns and/or operates the software distribution platform 1005 may be a developer, a seller, and/or a licensor of software such as the example machine readable instructions 932 of FIG. 9. The third parties may be consumers, users, retailers, OEMs, etc., who purchase and/or license the software for use and/or re-sale and/or sub-licensing. In the illustrated example, the software distribution platform 1005 includes one or more servers and one or more storage devices. The storage devices store the machine readable instructions 932, which may correspond to the example machine readable instructions of FIG. 8, as described above. The one or more servers of the example software distribution platform 1005 are in communication with an example network 1010, which may correspond to any one or more of the Internet and/or any of the example networks described above. In some examples, the one or more servers are responsive to requests to transmit the software to a requesting party as part of a commercial transaction. Payment for the delivery, sale, and/or license of the software may be handled by the one or more servers of the software distribution platform and/or by a third party payment entity. The servers enable purchasers and/or licensors to download the machine readable instructions 932 from the software distribution platform 1005. For example, the software, which may correspond to the example machine readable instructions of FIG. 8, may be downloaded to the example programmable circuitry platform 900, which is to execute the machine readable instructions 932 to implement the hydraulic management control system 700. In some examples, one or more servers of the software distribution platform 1005 periodically offer, transmit, and/or force updates to the software (e.g., the example machine readable instructions 932 of FIG. 9) to ensure improvements, patches, updates, etc., are distributed and applied to the software at the end user devices. Although referred to as software above, the distributed "software" could alternatively be firmware.

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc., may be present without falling outside the scope of the corresponding claim or recitation. As used herein, when the phrase "at least" is used as the transition term in, for example, a preamble of a claim, it is open-ended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, or (7) A with B and with C. As used herein in the context of describing structures, components, items, objects and/or things, the phrase "at least one of A and B" is intended to refer to implementations including any of (1) at least one A, (2) at least one B, or (3) at least one A and at least one B. Similarly, as used herein in the context of describing structures, components, items, objects and/or things, the phrase "at least one of A or B" is intended to refer to implementations including any of (1) at least one A, (2) at least one B, or (3) at least one A and at least one B. As used herein in the context of describing the performance or execution of processes, instructions, actions, activities, etc., the phrase "at least one of A and B" is intended to refer to implementations including any of (1) at least one A, (2) at least one B, or (3) at least one A and at least one B. Similarly, as used herein in the context of describing the performance or execution of processes, instructions, actions, activities, etc., the phrase "at least one of A or B" is intended to refer to implementations including any of (1) at least one A, (2) at least one B, or (3) at least one A and at least one B.

As used herein, singular references (e.g., "a", "an", "first", "second", etc.) do not exclude a plurality. The term "a" or "an" object, as used herein, refers to one or more of that object. The terms "a" (or "an"), "one or more", and "at least one" are used interchangeably herein. Furthermore, although individually listed, a plurality of means, elements, or actions may be implemented by, e.g., the same entity or object. Additionally, although individual features may be included in different examples or claims, these may possibly be combined, and the inclusion in different examples or claims does not imply that a combination of features is not feasible and/or advantageous.

Unless specifically stated otherwise, descriptors such as "first," "second," "third," etc., are used herein without imputing or otherwise indicating any meaning of priority, physical order, arrangement in a list, and/or ordering in any way, but are merely used as labels and/or arbitrary names to distinguish elements for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for identifying those elements distinctly within the context of the discussion (e.g., within a claim) in which the elements might, for example, otherwise share a same name.

As used herein, "approximately" and "about" modify their subjects/values to recognize the potential presence of variations that occur in real world applications. For example, "approximately" and "about" may modify dimensions that may not be exact due to manufacturing tolerances and/or other real world imperfections as will be understood by persons of ordinary skill in the art. For example, "approximately" and "about" may indicate such dimensions may be within a tolerance range of +/- 10% unless otherwise specified herein.

As used herein "substantially real time" refers to occurrence in a near instantaneous manner recognizing there may be real world delays for computing time, transmission, etc. Thus, unless otherwise specified, "substantially real time" refers to real time + 1 second.

As used herein, the phrase "in communication," including variations thereof, encompasses direct communication and/or indirect communication through one or more intermediary components, and does not require direct physical (e.g., wired) communication and/or constant communication, but rather additionally includes selective communication at periodic intervals, scheduled intervals, aperiodic intervals, and/or one-time events.

As used herein, "programmable circuitry" is defined to include (i) one or more special purpose electrical circuits (e.g., an application specific circuit (ASIC)) structured to perform specific operation(s) and including one or more semiconductor-based logic devices (e.g., electrical hardware implemented by one or more transistors), and/or (ii) one or more general purpose semiconductor-based electrical circuits programmable with instructions to perform specific functions(s) and/or operation(s) and including one or more semiconductor-based logic devices (e.g., electrical hardware implemented by one or more transistors). Examples of programmable circuitry include programmable microprocessors such as Central Processor Units (CPUs) that may execute first instructions to perform one or more operations and/or functions, Field Programmable Gate Arrays (FPGAs) that may be programmed with second instructions to cause configuration and/or structuring of the FPGAs to instantiate one or more operations and/or functions corresponding to the first instructions, Graphics Processor Units (GPUs) that may execute first instructions to perform one or more operations and/or functions, Digital Signal Processors (DSPs) that may execute first instructions to perform one or more operations and/or functions, XPUs, Network Processing Units (NPUs) one or more microcontrollers that may execute first instructions to perform one or more operations and/or functions and/or integrated circuits such as Application Specific Integrated Circuits (ASICs). For example, an XPU may be implemented by a heterogeneous computing system including multiple types of programmable circuitry (e.g., one or more FPGAs, one or more CPUs, one or more GPUs, one or more NPUs, one or more DSPs, etc., and/or any combination(s) thereof), and orchestration technology (e.g., application programming interface(s) (API(s)) that may assign computing task(s) to whichever one(s) of the multiple types of programmable circuitry is/are suited and available to perform the computing task(s).

As used herein, integrated circuit/circuitry is defined as one or more semiconductor packages containing one or more circuit elements such as transistors, capacitors, inductors, resistors, current paths, diodes, etc. For example, an integrated circuit may be implemented as one or more of an ASIC, an FPGA, a chip, a microchip, programmable circuitry, a semiconductor substrate coupling multiple circuit elements, a system on chip (SoC), etc. Example methods, apparatus, systems, and articles of manufacture to enable increased control of hydraulic systems as well as increased energy efficiency are disclosed herein. Further examples and combinations thereof include the following:
Example 1 includes an apparatus for controlling a hydraulic system to process a workpiece, the apparatus comprising interface circuitry, machine-readable instructions, and programmable circuitry to be programmed by the machine-readable instructions to determine pressure requirements and flow requirements for a plurality of hydraulic devices of the hydraulic system based on a sequence of operations to be performed by the hydraulic devices, predict flow of hydraulic fluid based on the pressure requirements and the flow requirements, and generate a motion profile plan for a motor powering the hydraulic system based on the predicted flow.
Example 2 includes the apparatus as defined in example 1, wherein the at least one programmable circuitry is to control the motor based on the motion profile plan.
Example 3 includes the apparatus as defined in any one or more of examples 1 or 2, wherein the programmable circuitry is to generate the motion profile plan based on hydraulic characteristics of the operations performed by the hydraulic devices.
Example 4 includes the apparatus as defined in any one or more of examples 1 to 3, wherein the operations correspond to different types of hydraulic devices, the hydraulic devices each having an identifier corresponding to a respective hydraulic characteristic.
Example 5 includes the apparatus as defined in any one or more of examples 1 to 4, wherein the programmable circuitry is to generate the motion profile plan based on a hydraulic demand forecast as a function of time.
Example 6 includes the apparatus as defined in any one or more of examples 1 to 5, wherein the programmable circuitry is to generate the motion profile plan based on timings of the operations and respective hydraulic fluid requirements of the operations.
Example 7 includes the apparatus as defined in any one or more of examples 1 to 6, wherein the programmable circuitry is to: generate a pressure target as a function of time based on the predicted flow, and generate the motion profile plan further based on the pressure target as a function of time.
Example 8 includes the apparatus as defined in any one or more of examples 1 to 7, wherein the programmable circuitry is to control a cooling pump based on the predicted flow.
Example 9 includes the apparatus as defined in any one or more of examples 1 to 8, wherein the programmable circuitry is to utilize a machine learning model in generating the motion profile plan.
Example 10 includes a non-transitory machine readable storage medium comprising instructions to cause programmable circuitry to at least determine pressure requirements and flow requirements for a plurality of hydraulic devices of a hydraulic system for processing a workpiece with a sequence of operations, predict flow of hydraulic fluid based on the pressure requirements and the flow requirements, and generate a motion profile plan for a motor powering the hydraulic system based on the predicted flow, the motion profile plan to be operated based on sensor output from the hydraulic system.
Example 11 includes the non-transitory machine readable storage medium as defined in example 10, the motor to be operated based on the motion profile plan and sensor output from the hydraulic system.
Example 12 includes the non-transitory machine readable storage medium as defined in any one or more of examples 10 or 11, wherein the instructions cause the programmable circuitry to generate the motion profile plan based on hydraulic characteristics of operations performed by the hydraulic devices.
Example 13 includes the non-transitory machine readable storage medium as defined in any one or more of examples 10 to 12, wherein the operations correspond to different types of hydraulic devices.
Example 14 includes the non-transitory machine readable storage medium as defined in any one or more of examples 10 to 13, wherein the instructions cause the programmable circuitry to generate the motion profile plan based on a hydraulic demand forecast as a function of time.
Example 15 includes the non-transitory machine readable storage medium as defined in any one or more of examples 10 to 14, wherein the instructions cause the programmable circuitry to generate the motion profile plan based on timings of operations and respective hydraulic fluid requirements of the operations.
Example 16 includes the non-transitory machine readable storage medium as defined in any one or more of examples 10 to 15, wherein the instructions cause the programmable circuitry to: generate a pressure target as a function of time based on the predicted flow, and generate the motion profile plan further based on the pressure target as a function of time.
Example 17 includes the non-transitory machine readable storage medium as defined in any one or more of examples 10 to 16, wherein the instructions cause the programmable circuitry to control a cooling pump based on the predicted flow.
Example 18 includes the non-transitory machine readable storage medium as defined in any one or more of examples 11 to 17, wherein the instructions cause the programmable circuitry to utilize a machine learning model in generating the motion profile plan, the machine learning model trained based on output from previous operations with respect to hydraulic settings.
Example 19 includes a method for controlling a hydraulic system in metal processing machinery, the method comprising determining pressure requirements and flow requirements for a plurality of hydraulic devices of the hydraulic system for processing a workpiece based on a sequence of operations to be performed by the hydraulic devices, predicting flow of hydraulic fluid based on the pressure requirements and the flow requirements, and generating a motion profile plan for a motor powering the hydraulic system based on the predicted flow.
Example 20 includes the method as defined in example 19, including controlling the motor based on the motion profile plan and sensor data of the hydraulic system.
Example 21 includes the method as defined in any one or more of examples 19 or 20, wherein the generating of the motion profile plan is based on one or more of hydraulic characteristics of the operations performed by the hydraulic devices, a hydraulic demand forecast as a function of time, timings of the operations and respective hydraulic fluid requirements of the operations, or a pressure target as a function of time based on the predicted flow.
Example 22 includes the method as defined in any one or more of examples 19 to 21, including controlling a cooling pump based on the predicted flow. Example 23 includes the method as defined in any one or more of examples 19 to 22, including utilizing a machine learning model in generating the motion profile plan, the machine learning model trained based on output workpiece characteristics from previous operations with respect to hydraulic settings.
From the foregoing, it will be appreciated that example systems, apparatus, articles of manufacture, and methods have been disclosed that enable energy-efficient and accurately controlled operation of hydraulic systems. Disclosed systems, apparatus, articles of manufacture, and methods improve quality of components produced via hydraulic processes. Examples disclosed herein can also enable greater longevity of hydraulic components by accurately controlling pressure based on requirements.

The following claims are hereby incorporated into this Detailed Description by this reference. Although certain example systems, apparatus, articles of manufacture, and methods have been disclosed herein, the scope of coverage of this patent is not limited thereto. On the contrary, this patent covers all systems, apparatus, articles of manufacture, and methods fairly falling within the scope of the claims of this patent.

## Claims

1. An apparatus for controlling a hydraulic system to process a workpiece, the apparatus comprising:
interface circuitry;
machine readable instructions; and
programmable circuitry to be programmed by the machine readable instructions to:
determine pressure requirements and flow requirements for a plurality of hydraulic devices of the hydraulic system based on a sequence of operations to be performed by the hydraulic devices;
predict flow of hydraulic fluid based on the pressure requirements and the flow requirements; and
generate a motion profile plan for a motor powering the hydraulic system based on the predicted flow.

2. The apparatus as defined in claim 1, wherein the programmable circuitry is to control the motor based on the motion profile plan.

3. The apparatus as defined in any one or more of claims 1 or 2, wherein the programmable circuitry is to generate the motion profile plan based on hydraulic characteristics of the operations performed by the hydraulic devices.

4. The apparatus as defined in any one or more of claims 1 to 3, wherein the operations correspond to different types of hydraulic devices, the hydraulic devices each having an identifier corresponding to a respective hydraulic characteristic.

5. The apparatus in any one or more of claims 1 to 4, wherein the programmable circuitry is to generate the motion profile plan based on a hydraulic demand forecast as a function of time.

6. The apparatus as defined in any one or more of claims 1 to 5, wherein the programmable circuitry is to generate the motion profile plan based on timings of the operations and respective hydraulic fluid requirements of the operations.

7. The apparatus as defined in any one or more of claims 1 to 6, wherein the programmable circuitry is to:
generate a pressure target as a function of time based on the predicted flow; and
generate the motion profile plan based on the pressure target as a function of time.

8. The apparatus in any one or more of claims 1 to 7, wherein the programmable circuitry is to control a cooling pump based on the predicted flow.

9. The apparatus as defined in any one or more of claims 1 to 8, wherein the programmable circuitry is to utilize a machine learning model in generating the motion profile plan.

10. A method for controlling a hydraulic system, the method comprising:
determining pressure requirements and flow requirements for a plurality of hydraulic devices of the hydraulic system for processing a workpiece based on a sequence of operations to be performed by the hydraulic devices;
predicting flow of hydraulic fluid based on the pressure requirements and the flow requirements; and
generating a motion profile plan for a motor powering the hydraulic system based on the predicted flow.

11. The method as defined in claim 10, including controlling the motor based on the motion profile plan and sensor data of the hydraulic system.

12. The method as defined in any one or more of claims 10 or 11, wherein the generating of the motion profile plan is based on one or more of hydraulic characteristics of the operations performed by the hydraulic devices, a hydraulic demand forecast as a function of time, timings of the operations and respective hydraulic fluid requirements of the operations, or a pressure target as a function of time based on the predicted flow.

13. The method as defined in any one or more of claims 10 to 12, including controlling a cooling pump based on the predicted flow.

14. The method as defined in any one or more of claims 10 to 13, including utilizing a machine learning model in generating the motion profile plan, the machine learning model trained based on output workpiece characteristics from previous operations with respect to hydraulic settings.

15. A machine-readable storage including machine-readable instructions, when executed, cause programmable circuitry to implement a method as claimed in any preceding claim.
